# FASCICULE DE BREVET EUROPEEN

(11) **EP 0 375 522 B1**
(45) Date de publication et mention de la délivrance du brevet: **27.07.1994**
(21) Numéro de dépôt: 89403501.3
(22) Date de dépôt: 15.12.1989
(51) Int. Cl.: C08H 1/00, G03C 1/047

(54) **Gélatine fluorée et procédé d'obtention**
Fluorierte Gelatine und Verfahren zu deren Herstellung
Fluorinated gelatin and process for its preparation

(30) Priorité: 16.12.1988 FR 8816673
(43) Date de publication de la demande: 27.06.1990
(73) Titulaire: ELF SANOFI, 75008 Paris (FR)
(72) Inventeur: Dumas, Sylviane, F-84800 Isle Sur La Sorgue (FR); Takerkart, Georges, F-84800 Isle Sur La Sorgue (FR)
(74) Mandataire: Gillard, Marie-Louise

(56) Documents cités:
- GB-A- 1 101 291
- US-A- 2 614 928
- US-A- 3 133 908

## Description

La présente invention concerne des gélatines modifiées par fixation sur la chaîne protéique de groupements polyfluorés, un procédé de préparation de ces gélatines et leurs applications notamment dans le domaine photographique.

On sait que les dérivés polyfluorés, qu'ils dérivent d'hydrocarbures ou de composés fonctionnalisés, sont hydrophobes et oléophobes et ceci fait que, malgré leur prix de revient élevé, leurs utilisations se multiplient.

Ainsi ce sont des agents tensio-actifs particulièrement intéressants, lorsqu'ils dérivent d'hydrocarbures aliphatiques ayant de 4 à 12 atomes de carbone et que l'une des extrémités de la molécule est polyfluorée ; ils sont utilisés comme agents mouillants et émulsionnants, comme additifs dans les cires et les peintures, ou dans les revêtements de textiles, de papiers et de cuirs.

Ils sont aussi introduits dans les pellicules photographiques, par exemple comme agents antistatiques pour éviter la formation de taches dues aux charges électriques apparues durant la fabrication ou le traitement des films, ou encore pour leur action antiadhérente et de glissement pour limiter le phénomène de collage en milieu humide des couches comportant un liant hydrophile, tel que la gélatine ; ces applications sont notamment décrites dans les brevets US 4 201 586 et GB 1 604 741.

On a maintenant trouvé que le greffage de groupes polyfluorés sur les chaînes protéiques de la gélatine était possible et que la gélatine modifiée obtenue présentait des avantages non négligeables, par rapport au mélange de gélatine et de produit fluoré, précédemment connu. D'une part, la chaîne polyfluorée étant greffée sur la molécule par liaison covalente, les difficultés d'homogénéisation des mélanges de gélatine et de produit fluoré disparaissent et la composition obtenue est stable dans le temps, le produit fluoré de faible masse moléculaire ne pouvant plus migrer entre les chaînes protéiques.

D'autre part, la gélatine modifiée a une viscosité en général supérieure à celle de la gélatine de départ, sans qu'il y ait de modification notable de la force en gel, ni d'augmentation de la masse moléculaire apparente ; ceci est particulièrement utile dans le domaine photographique où il est important, lors du couchage de l'émulsion, d'avoir des compositions qui s'étalent facilement pour déposer des couches successives de très faible épaisseur. En outre, l'activité antistatique de la gélatine modifiée est supérieure à celle du simple mélange de gélatine et de dérivé fluoré, pour les mêmes taux de fluor.

Les gélatines modifiées de l'invention comportent des groupes polyfluorés greffés sur la chaîne protéique de formule R_{F}Z- ,dans laquelle Z représente SO₂, CO, ou -CH(OH)-CH₂- et R_{F} représente une chaîne hydrocarbonée saturée en C₁ à C₁₅, de préférence en C₃ à C₁₀, linéaire ou ramifiée, comprenant éventuellement un hétéroatome, tel que O, ou un groupe d'hétéroatomes tel que -SO₂N-, la majorité ou la totalité des atomes d'hydrogène de ladite chaîne hydrocarbonée étant remplacée par des atomes de fluor ou R_{F} représente un noyau phényle polyfluoré, les groupes R_{F}Z- étant fixés sur l'azote des groupes aminés ou sur l'oxygène des groupes hydroxyles de la protéine. Parmi les groupes de formule R_{F}Z- dans laquelle R_{F} représente une chaîne hydrocarbonée comprenant éventuellement un hétéroatome on peut citer notamment les groupes de formule : 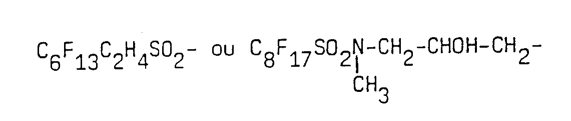
Les gélatines de départ peuvent être des gélatines de type A résultant de l'hydrolyse acide du collagène ou de type B résultant de l'hydrolyse basique, dont la masse moléculaire moyenne en poids est comprise en général entre 30000 et 200000 ; pour les applications photographiques, on préfère les gélatines de type B. Le taux de fluor des gélatines modifiées de l'invention est compris entre 0,02 % et 5 % en poids et de préférence entre 0,05 et 2 %.

Le procédé de l'invention pour la préparation des gélatines modifiées consiste à faire réagir un dérivé du groupe R_{F}Z- tel que défini plus haut portant une fonction susceptible de réagir sur les groupes NH₂ ou OH d'une gélatine naturelle en solution aqueuse, en formant une liaison covalente. La solution aqueuse de gélatine aura une concentration en général comprise entre 5 % et 20 % (poids/poids) ; pour les gélatines de faible masse moléculaire, dont la viscosité en solution est peu prononcée, cette concentration pourra même parfois être supérieure il importe en effet que le milieu puisse être agité et homogénéisé au cours de la réaction. La réaction sera effectuée, en général, à une température comprise entre 30°C et 70°C et à un pH supérieur à 7 et mieux encore, supérieur à 8, mais de préférence inférieur à 10 pour éviter l'hydrolyse de la gélatine.

Le réactif peut être selon le cas, un sulfochlorure, un sulfofluorure, un anhydride sulfonique, un chlorure ou un fluorure d'acide carboxylique, un anhydride d'acide carboxylique ou un époxyde ; il est introduit dans le milieu, éventuellement en solution dans un solvant miscible à l'eau et non réactif dans les conditions opératoires comme un alcool, tel que l'isopropanol, comme un éther, tel que les diéthers méthylique et éthylique de l'éthylène glycol ou du diéthylène glycol ou comme une cétone, telle que l'acétone ou la méthyléthylcétone ; on introduit de 1 à 30 % en poids de réactif fluoré par rapport au poids de gélatine et de préférence de 5 à 20 % pour les réactifs comportant de 5 à 8 atomes de carbone polyfluorés.

Parmi les réactifs fluorés dérivés d'acides sulfoniques, on peut citer les sulfofluorures de formule CₙF₂ₙ₊₁SO₂F, dans laquelle n représente un nombre pair de 4 à 10, commercialisés par la société 3M, les sulfochlorures de formule CₙF₂ₙ₊₁C₂H₄SO₂Cl dans lesquels n représente un nombre de 2 à 8, fournis par la société Atochem (France), ou encore CF₃SO₂Cl et (CF₃SO₂)₂O.

Parmi les réactifs fluorés acylés on peut citer les chlorures d'acides CF₃(CF₂)ₙCOCl commercialisés par Alfa ou Fluorochem (USA), le fluorure C₇F₁₅COF fourni par Atochem ou les anhydrides (CF₃(CF₂)₂CO)₂O et (CF₃CO)₂O. Parmi les époxydes, on peut citer le produit de la société 3M : 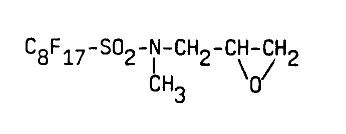
En fin de réaction, le produit fluoré n'ayant pas réagi et ses dérivés de décomposition ainsi que les sels peuvent être éliminés par passage du milieu réactionnel éventuellement dilué, sur des résines échangeuses d'anions et de cations, après filtration ou centrifugation si un précipité s'est formé. On peut aussi purifier le milieu par dialyse ou par ultrafiltration. De cette façon, la teneur en cendres de la gélatine ainsi modifiée, isolée après évaporation de l'eau sera inférieure à 1 %, ce qui est nécessaire pour certaines applications.

Dans ce qui suit, on décrit des exemples de réalisation de l'invention. Les teneurs en fluor ont été déterminées par des méthodes classiques : minéralisation des échantillons de gélatine modifiée selon la méthode de Schöniger, et dosage des fluorures formés par colorimétrie, potentiométrie ou chromatographie d'échange d'ions. On a vérifié qu'après une dialyse prolongée d'une solution aqueuse de gélatine fluorée de l'invention le taux de fluor n'était pas modifié, ce qui démontre que les chaînes fluorées sont effectivement greffées sur la protéine, par le procédé de l'invention.

### Exemple 1

On introduit 400 g de gélatine de type B et 3600 ml d'eau dans un réacteur maintenu à 50°C, muni d'un agitateur mécanique. Après fusion et dissolution de la gélatine, on introduit une solution aqueuse de NaOH 5N jusqu'à pH 8 ; le pH sera maintenu à cette valeur pendant toute la réaction par addition de cette même solution.

40 g de C₆F₁₃C₂H₄SO₂Cl en solution dans 200 ml d'isopropanol sont alors introduits goutte à goutte en 20 minutes et l'agitation et la température sont maintenues jusqu'à ce que le pH n'évolue plus, soit 3 heures environ.

On acidifie alors le milieu à pH 5,9 par addition d'une solution aqueuse d'acide nitrique 5N, et le maintient à 50°C sous agitation pendant 1 heure. Le léger précipité formé est éliminé par filtration et le milieu est passé successivement dans des colonnes, thermostatées à 50°C, contenant 1 litre (850 g) de la résine cationique IR 120 sous forme H⁺ et contenant 1 litre (720 g) de la résine anionique IRA 400 sous forme OH⁻, résines de type Amberlite ^{R} commercialisées par ROHM et HAAS.

Le pH de la solution aqueuse éluée est ramené entre 5,8 et 6 par addition d'une solution aqueuse de NaOH 5N, puis la solution de gélatine modifiée est figée par refroidissement avant d'être hachée et séchée de façon classique.

La gélatine fluorée, ainsi préparée, avec 75 % de rendement en poids par rapport à la gélatine mise en oeuvre, contient 0,15 % de fluor en poids par rapport au poids de la gélatine. La force en gel de la gélatine de départ, mesurée selon la méthode du Gelatin Manufacturer Institute of America : Standard methods for the sampling and testing of gelatins (température 60°C ; concentration 6,67 g/100 ml) était de 267 blooms, celle de la gélatine fluorée de 277 blooms, tandis que la viscosité de la gélatine, en solution aqueuse à 6,66 % (p/p), mesurée à 60°C selon la norme Afnor NF V 59-001 (10/1982) - qui était de 4,71 mPa.s avant traitement, était de 7,41 mPa.s pour la gélatine fluorée.

### Exemple 2

100 g de gélatine de type B, identique à celle mise en oeuvre à l'exemple 1, et 900 ml d'eau déminéralisée sont introduits dans un réacteur muni d'un agitateur, maintenu à 50°C. Comme précédemment, le pH est porté de 5,74 à 8 avant d'introduire goutte à goutte en 20 minutes 16 g de C₆F₁₃C₂H₄SO₂Cl en solution dans 40 ml d'isopropanol ; le pH du milieu est maintenu 3 heures à 8 ; l'isolement de la gélatine fluorée est effectuée selon la méthode décrite à l'exemple précédent mais le milieu réactionnel est dilué avant le passage sur colonne jusqu'à une concentration en gélatine d'environ 6 % (p/p).

On obtient dans ces conditions, avec 75 % de rendement, une gélatine modifiée comportant 0,25 % de fluor dont la force en gel est de 268 blooms et la viscosité 11,31 mPa.s.

### Exemple 3

100 g de gélatine de type A sont dissous dans 200 ml d'eau dans un réacteur maintenu à 50°C et le pH du milieu est amené à 9 par addition d'une solution aqueuse de NaOH 5N, et maintenu à cette valeur pendant toute la durée de la réaction.

On introduit en 15 minutes dans le milieu une solution de 10 g de C₆F₁₃C₂H₄SO₂Cl dans 25 ml d'isopropanol et, après 2 heures, on acidifie jusqu'à pH 5,9 puis purifie par passage sur des résines échangeuses d'ions, comme dans les exemples précédents.

Dans ces conditions, on obtient à partir d'une gélatine de force en gel : 277 blooms et de viscosité à 60°C : 4,53 mPa.s, avec 70 % de rendement, une gélatine de force en gel : 247 blooms et de viscosité : 5,18 mPa.s.

La teneur en fluor est de 0,6 %.

### Exemple 4

50 g de gélatine de type B, identique à celle mise en oeuvre dans l'exemple 1, et 450 ml d'eau déminéralisée sont introduits dans un réacteur muni d'un agitateur. Le mélange est thermostaté à 50°C. Le pH est amené à 9 avec une solution de soude 5N. 6,5 g de réactif C₆F₁₃C₂H₄SO₂Cl, à l'état fondu et maintenu lui-même à 50°C, sont ajoutés goutte à goutte dans le milieu en 30 minutes. Le pH est ensuite maintenu à 9 pendant 1 heure, puis on isole la gélatine fluorée comme précédemment décrit.

Le rendement est de 65 %.

Dans ces conditions, on obtient une gélatine fluorée dont la force en gel est 268 blooms, la viscosité 5,22 mPa.s et la teneur en fluor de 0,1 %.

### Exemple 5

150 g de la gélatine de type B et 850 ml d'eau déminéralisée sont introduits dans un réacteur, maintenu à 60°C ; le pH du milieu est porté à 9,8 par addition d'une solution aqueuse de NaOH 5N et,sous forte agitation, on introduit goutte à goutte 4,6 g de C₆F₁₃C₂H₄SO₂Cl, fondu, à 60°C, en 60 minutes environ. L'agitation est maintenue une heure après la fin d'addition, puis le chauffage du réacteur est arrêté. On introduit ensuite dans le milieu une solution aqueuse d'acide nitrique 5N jusqu'à pH 5,8 et on dilue par addition d'eau jusqu'à une concentration en gélatine de 8 % (p/v). Le milieu est alors filtré et chromatographié sur colonnes de résines échangeuses d'ions, comme à l'exemple 1. Après évaporation de l'eau, on obtient à partir d'une gélatine de force en gel 267 blooms et de viscosité 4,59 mPa.s, avec 79 % de rendement, une gélatine fluorée de force en gel 259 blooms et de viscosité 5,20 mPa.s ; sa teneur en fluor est 0,14 %.

### Exemple 6

A) Une solution de 225 g de gélatine de type B (267 blooms ; 4,59 mPa.s) dans 1500 ml d'eau à 60°C est amenée à pH 9. Sous forte agitation, on introduit alors en 20 minutes, en maitenant le pH, 29,25 g de C₆F₁₃C₂H₄SO₂Cl, fondu, à 60°C. Après 40 minutes au cours desquelles la température, le pH, et l'agitation sont maintenus, on traite comme à l'exemple 5 pour isoler une gélatine modifiée, contenant 0,19 % de fluor et ayant une force en gel de 247 blooms et une viscosité de 5,76 mPa.s.
B) En appliquant le même mode opératoire, mais en introduisant seulement 22,5 g de réactif, on obtient une gélatine modifiée contenant 0,13 % de fluor, de force en gel 265 blooms et de viscosité 5,22 mPa.s.

### Exemple 7

Dans un réacteur maintenu à 60°C, on amène à pH 9 une solution de 100 g de gélatine de type B dans 900 ml d'eau, par addition d'une solution aqueuse de NaOH 5N. On introduit alors sous agitation, goutte à goutte, en 20 minutes 14,97 g de C₇F₁₅COF : le pH du milieu est maintenu à 9 par addition de la solution de NaOH ; 40 minutes après la fin de la réaction, le milieu est filtré et déminéralisé sur colonnes échangeuses d'ions puis la gélatine fluorée est isolée comme à l'exemple 1. Sa teneur en fluor est de 0,73 % pour une force en gel de 265 blooms et une viscosité de 5,30 mPa.s (gélatine de départ : 266 blooms, 4,62 mPa.s).

### Exemple 8

50 g de gélatine de type 8 et 450 ml d'eau sont introduits dans un réacteur maintenu à 50°C. Après fusion de la gélatine, le pH du milieu est amené à 8 par addition d'une solution aqueuse de NaOH 5N. On ajoute en 30 minutes, sous agitation, 5 g de CF₃(CF₂)₆COCl dissous dans 20 ml d'acétone, en maintenant le pH du milieu à 8 par addition simultanée d'une solution aqueuse de NaOH.

Après 3 heures d'agitation, le milieu est acidifié à pH 5,9 par addition d'une solution aqueuse de HNO₃ 5N puis traité comme à l'exemple 1.

On obtient ainsi une gélatine fluorée de force en gel 286 blooms (départ 266 blooms) et de viscosité 5,57 mPa.s (départ 4,62 mPa.s) contenant 0,022 % de fluor, avec 82 % de rendement.

### Exemple 9

On introduit 100 g de gélatine de type B et 900 ml d'eau déminéralisée dans un réacteur à 50°C et on amène le pH du milieu à 9, valeur qui sera maintenue pendant toute la durée de la réaction. On ajoute sous agitation, en 15 minutes, 5 g de : 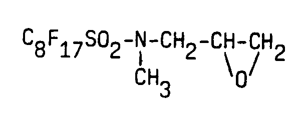
dissous dans 40 ml d'acétone, et maintient le milieu sous agitation à cette température pendant 1 heure.

Le milieu est ensuite amené à pH 6 par addition d'une solution aqueuse de HNO₃ 5N et traité comme précédemment. On obtient ainsi une gélatine fluorée, contenant 0,24 % de fluor dont la force en gel est 283 blooms et la viscosité 4,88 mPa.s (gélatine de départ 266 blooms; 4,62 mPa.s).

### Exemple 10

100 g de gélatine mise en oeuvre à l'exemple 9 et 900 ml d'eau sont introduits dans un réacteur maintenu à 60°C ; le pH initialement de 5,6, est porté à 9,5 par addition d'une solution aqueuse de NaOH 5N. On introduit alors dans le milieu agité 10,96 g de C₆F₅SO₂Cl goutte à goutte, en maintenant le pH à 9,5. La gélatine fluorée est isolée selon le procédé décrit à l'exemple 1, après avoir acidifié la solution jusqu'à pH 4,86.

Cette gélatine, contenant 0,17 % de fluor, a une force en gel de 227 blooms et une viscosité de 6,92 mPa.s.

### Exemple 11

On introduit goutte à goutte en 20 minutes, dans une solution aqueuse de gélatine de type B mis en oeuvre à l'exemple 9 à 10 % (p/p) maintenue à 60°C et pH 10, 6,05 g de chlorure d'acide trifluorométhanesulfonique en solution dans 40 ml d'isopropanol. Après 40 minutes d'agitation le milieu est acidifié à pH 5,8 et traité comme dans les exemples précédents.

On isole ainsi avec 82 % de rendement de la gélatine fluoré contenant 0,10 % de fluor, de force en gel 230 blooms et de viscosité 5,2 mPa.s.

### Exemple 12

On introduit dans un réacteur muni d'une agitation à 60°C 100 g de gélatine de type B mise en oeuvre à l'exemple 9 et 900 ml d'eau déminéralisée et amène le pH du milieu à 10 par addition d'une solution aqueuse de NaOH 5N. On introduit alors, goutte à goutte, 18,07 g de C₈F₁₇SO₂F en 20 minutes. 1 heure après la fin de l'addition, le pH du milieu est amené à 5,9 et le traitement habituel effectué.

On isole ainsi avec 75 % de rendement une gélatine modifiée contenant 0,13 % de fluor, dont la force en gel est de 242 blooms et la viscosité de 4,1 mPa.s.

### Exemple 13

On introduit dans une solution de 100 g de gélatine de type B dans 900 ml d'eau, à 60°C et à pH 9, 10,15 g d'anhydridetrifluorométhane sulfonique en 20 minutes. Après 40 minutes, on acidifie jusqu'à pH 5,8 et traite comme dans les exemples précédents. On obtient ainsi une gélatine modifiée contenant 0,02 % de fluor et ayant une force en gel de 268 blooms et une viscosité de 4,41 mPa.s (gélatine de départ 267 blooms; 4,41 mPa.s).

On a comparé la viscosité de solutions de gélatines fluorées selon l'invention avec celles d'un mélange de gélatine et du dérivé fluoré de départ hydrolysé. Les résultats des mesures de viscosité figurent dans le tableau I.

**TABLEAU I**

| Gélatine | Viscosité mPa.s |
|---|---|
| de départ | 4,71 |
| Exemple 1 | 7,41 |
| Exemple 4 | 5,22 |
| Mélange à 0,1 % de F, avec C₆F₁₃C₂H₄SO₃H | 4,09 |

Les propriétés antistatiques ont été appréciées avec un appareil commercialisé par la Société Eltex Electrostatique - Asnières, France, sous la référence EMF 20, qui permet la mesure du temps de décharge de films préalablement soumis à l'action d'un champ électrique intense ; les mesures ont été effectuées à 23°C et un taux d'humidité de 40 % ; dans le tableau II figurent les temps, en secondes, nécessaires pour que disparaissent 50 %, 70 % ou 90 % de la charge du film de gélatine, selon sa charge initiale.

**TABLEAU II**

| Gélatine | Charge initiale du film kV | Temps de décharge en s | | |
|---|---|---|---|---|
| | | de 50 % | 70 % | 90 % |
| de départ | 1,8 | 1,9 | 3,1 | 20,9 |
| exemple 1 | 1,9 | 1,4 | 2,2 | 7,9 |
| exemple 6 A | 1,7 | 0,9 | 1,6 | - |
| exemple 6 B | 2,0 | 1,5 | 2,6 | 7,9 |

## Revendications

1. Gélatine modifiée, caractérisée en ce qu'elle porte des groupes de formule R_{F}Z- dans laquelle Z représente SO₂, CO ou -CH(OH)-CH₂- et R_{F} représente une chaîne hydrocarbonée fluorée en C₁ à C₁₅, linéaire ou ramifiée, la majorité ou la totalité des atomes d'hydrogène de ladite chaîne hydrocarbonée étant remplacée par les atomes de fluor, éventuellement interrompue par un hétéroatome ou un groupe d'hétéroatomes, ou un noyau phényle polyfluoré, lesdits groupes étant greffés sur la chaîne protéique.

2. Gélatine selon la revendication 1, caractérisée en ce que Z représente SO₂.

3. Gélatine selon la revendication 1, caractérisée en ce que Z représente CO.

4. Gélatine selon l'une des revendications 1 à 3, caractérisée en ce que R_{F} est un groupe polyfluoroalkyle en C₃ à C₁₀.

5. Gélatine selon la revendication 1, caractérisée en ce que le groupe R_{F}Z- est C₆F₁₃C₂H₄SO₂-.

6. Gélatine selon la revendication 1, caractérisée en ce que R_{F}Z- est le groupe

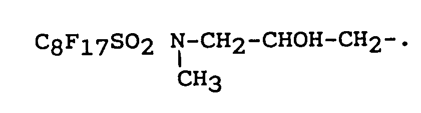

7. Procédé de préparation d'une gélatine selon l'une quelconque des revendications 1 à 6, caractérisé en ce que l'on fait réagir un dérivé du groupe R_{F}Z- tel que défini dans la revendication 1 comportant un groupe susceptible de réagir sur les fonctions OH ou NH₂ de la gélatine en solution aqueuse, ledit dérivé étant choisi parmi un chlorure, un fluorure ou un anhydride d'acide sulfonique lorsqu'on veut préparer une gélatine dans laquelle Z est un groupe SO₂ ; un chlorure, un fluorure ou un anhydride d'acide carboxylique lorsqu'on veut préparer une gélatine dans laquelle Z est un groupe CO; et un époxyde lorsqu'on veut préparer une gélatine dans laquelle Z est un groupe -CH(OH)-CH₂.

8. Procédé selon la revendication 7, caractérisé en ce que le milieu réactionnel est à un pH compris entre 7 et 10 et une température comprise entre 30°C et 70°C.

9. Procédé selon l'une des revendications 7 ou 8, caractérisé en ce que le réactif est ajouté en solution dans un solvant inerte, miscible à l'eau.

10. Application de la gélatine modifiée telle que définie dans l'une quelconque des revendications 1 à 6 à la préparation de films photographiques.

## Claims

1. Modified gelatin, characterized in that it carries groups of the formula R_{F}Z-, in which Z represents SO₂, CO or -CH(OH)-CH₂- and R_{F} represents a linear or branched C₁ to C₁₅ fluorinated hydrocarbon chain, all or most of the hydrogen atoms of said hydrocarbon chain being replaced with fluorine atoms, which chain may be interrupted by a heteroatom or a group of heteroatoms, or a polyfluorinated phenyl ring, said groups being grafted on to the protein chain.

2. Gelatin according to claim 1, characterized in that Z represents SO₂.

3. Gelatin according to claim 1, characterized in that Z represents CO.

4. Gelatin according to any one of claims 1 to 3, characterized in that R_{F} is a C₃ to C₁₀ polyfluoroalkyl group.

5. Gelatin according to claim 1, characterized in that the group R_{F}Z- is C₆F₁₃C₂H₄SO₂-.

6. Gelatin according to claim 1, characterized in that R_{F}Z- is the group

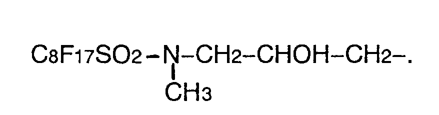

7. Process for the preparation of a gelatin according to any one of claims 1 to 6, characterized in that a derivative of the R_{F}Z group as defined in claim 1 is reacted containing a group capable of reacting with the OH or NH₂ groups of the gelatin in aqueous solution, said derivative being selected from a sulfonic acid chloride, fluoride or anhydride for the preparation of a gelatin in which Z is an SO₂ group; a carboxylic acid chloride, fluoride or anhydride for the preparation of a gelatin in which Z is a CO group; and an epoxide for the preparation of a gelatin in which Z is a -CH(OH)-CH₂ group.

8. Process according to claim 7, characterized in that the reaction medium is at a pH of between 7 and 10 and a temperature of between 30°C and 70°C.

9. Process according to one of claims 7 or 8, characterized in that the reagent is added in solution in a water-miscible inert solvent.

10. Application of the modified gelatin as defined in any one of claims 1 to 6 to the preparation of photographic films.

## Patentansprüche

1. Modifizierte Gelatine, dadurch gekennzeichnet, daß sie Gruppen der Formel R_{F}Z- aufweist, worin Z SO₂, CO oder -CH(OH)-CH₂- und R_{F} eine geradkettige oder verzweigte fluorierte C₁₋₁₅-Kohlenwasserstoffkette darstellen in der die Mehrzahl der Wasserstoffatome oder alle Wasserstoffatome durch Fluoratome ersetzt sind und die ggfs. durch ein Heteroatom, eine Gruppe aus Heteroatomen oder durch einen polyfluorierten Phenylkern unterbrochen ist, wobei die oben genannten Gruppen auf die Proteinkette aufgepfropft sind.

2. Modifizierte Gelatine nach Anspruch 1, dadurch gekennzeichnet, daß Z SO₂ darstellt.

3. Modifizierte Gelatine nach Anspruch 1, dadurch gekennzeichnet, daß Z CO darstellt.

4. Modifizierte Gelatine nach einem der Ansprüche 1 bis 3, dadurch gekennzeichnet, daß R_{F} eine C₃₋₁₀-Polyfluoralkylgruppe ist.

5. Modifizierte Gelatine nach Anspruch 1, dadurch gekennzeichnet, daß die R_{F}Z-Gruppe C₆F₁₃C₂H₄SO₂- ist.

6. Modifizierte Gelatine nach Anspruch 1, dadurch gekennzeichnet, daß die R_{F}Z-Gruppe 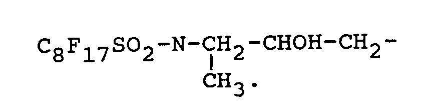 ist.

7. Verfahren zur Herstellung der modifizierten Gelatine nach einem der Ansprüche 1 bis 6, dadurch gekennzeichnet, daß ein Derivat der Gruppe R_{F}Z-, die wie in Anspruch 1 definiert ist und eine Gruppe enthält, die mit den OH- oder NH₂- Funktionen der Gelatine zu reagieren vermag, in wässeriger Lösung mit der Gelatine zur Reaktion gebracht wird, wobei das Derivat ausgewählt wird unter
- Chloriden, Fluoriden oder Anhydriden von Sulfonsäuren, wenn eine Gelatine hergestellt werden soll, in der Z eine SO₂-Gruppe ist;
- Chloriden, Fluoriden oder Anhydriden von Carbonsäuren, wenn eine Gelatine hergestellt werden soll, in der Z eine CO-Gruppe ist, und
- Epoxiden, wenn eine Gelatine hergestellt werden soll, in der Z eine -CH(OH)-CH₂-Gruppe ist.

8. Verfahren nach Anspruch 7, dadurch gekennzeichnet, daß der pH des Reaktionsgemischs 7 bis 10 und die Temperatur 30 bis 70 °C betragen.

9. Verfahren nach Anspruch 7 oder 8, dadurch gekennzeichnet, daß das Reagens in Lösung in einem inerten, mit Wasser mischbaren Lösungsmittel zugegeben wird.

10. Verwendung der modifizierten Gelatine nach einem der Ansprüche 1 bis 6 zur Herstellung photographischer Filme.
